# EUROPEAN PATENT APPLICATION

(11) **EP 1 418 558 A2**
(43) Date of publication of application: **12.05.2004**
(21) Application number: 03257045.9
(22) Date of filing: 07.11.2003
(51) Int. Cl.: G09F 3/00, G09F 3/02

(54) **A method and system for providing recycling information**

(30) Priority: 08.11.2002 US 290588
(71) Applicant: Hewlett-Packard Development Company, L.P., Houston, Texas 77070 (US)
(72) Inventor: Bedner, Llja, Palo Alto California 94306 (US); Teksler, Boris, Menlo Park California 94025 (US); Worland, Sheila, Palo Alto California 94306 (US)
(74) Representative: Tollett, Ian

(57) **Abstract**

A method and system for providing recycling information is disclosed. Through the use of the method and system in accordance with the present invention, the likelihood that a consumer will have the information necessary to effectively recycle a product is increased. Additionally, the possibility that the product is returned to a location preferred by a vendor, as opposed to returning the product to a competitor, is also substantially increased. A first aspect of the invention is a method for providing recycling information for an article of manufacture. The method comprises providing an article of manufacture and placing recycling information [210] directly on the article of manufacture wherein the recycling information [210] comprises instructions on where to recycle the article of manufacture. A second aspect of the invention is a system for providing recycling information for an article of manufacture. The system comprises means for determining when the article of manufacture needs to be recycled and means for providing recycling information [210] wherein the recycling information [210] comprises instructions on where to recycle the article of manufacture once the article of manufacture needs to be recycled.

## Description

The present invention relates generally to recycling and more particularly to a method and system for providing recycling information on a computer product/article of manufacture.

Environmental awareness has become an increasingly growing trend in our society. Energy conservation and efficiency go a long way in the preservation of the planet's rich natural resources and promoting a healthy environment. Along these lines, society's growing dependence on electronics/computer products both in the home environment and in the workplace has given rise to a new environmental challenge: electronic waste. One way to combat electronic waste is through the recycling of computer products.

Recycling computer products, such as monitors, printer cartridges, batteries, etc. usually involves taking the used product to a recycling center where the product can be refurbished and subsequently resold. In order to effectuate the recycling process, companies like Hewlett-Packard typically include in the packaging of the computer product an insert or pamphlet that provides directions on where to recycle the particular product when the time comes to dispose of the product.

However, a problem with this approach arises due to the fact that when the time comes to dispose of the product, the consumer is usually no longer in possession of the insert or pamphlet that provides directions on where to recycle the product. As a result, the consumer might return the product to a competing manufacturer. This is problematic because the competing manufacturer could refurbish and resell the product under the guise of the original manufacturer even though the refurbished product lacks the quality that is associated with the original manufacturer.

Accordingly, what is needed is a method and system that addresses above-outlined shortcomings of the existing methodology. The method and system should be simple, cost effective and capable of being easily adapted to existing technology. The present invention addresses these needs.

A method and system for providing recycling information is disclosed. Through the use of the method and system in accordance with the present invention, the likelihood that a consumer or user will have the information necessary to effectively recycle a product, when the time comes to dispose of the product, is increased. Additionally, the possibility that the product is returned to a location preferred by a vendor, as opposed to returning the product to a competitor, is also substantially increased.

A first aspect of the invention is a method for providing recycling information for an article of manufacture. The method includes providing an article of manufacture and placing recycling information directly on the article of manufacture wherein the recycling information comprises instructions on where to recycle the article of manufacture.

A second aspect of the invention is a system for providing recycling information for an article of manufacture. The system includes means for determining when the article of manufacture needs to be recycled and means for providing recycling information wherein the recycling information comprises instructions on where to recycle the article of manufacture once the article of manufacture needs to be recycled.

Other aspects and advantages of the present invention will become apparent from the following detailed description, taken in conjunction with the accompanying drawings, illustrating by way of example a number of preferred embodiments of the invention.
Figure 1 is a high-level flow chart of a method in accordance with an embodiment of the present invention.
Figure 2 is an illustration of a sticker/label in accordance with an embodiment of the present invention.
Figure 3 shows an example of a computer system that could be utilized in conjunction with an embodiment of the present invention.
Figure 4 shows an ink jet printer and a laser printer.
Figure 5 is flowchart of an alternate embodiment of the present invention.
Figure 6 is an illustration of a data storage diskette in accordance with an embodiment of the present invention.

The present invention relates to a method and system for providing recycling information. The following description is presented to enable one of ordinary skill in the art to make and use the invention and is provided in the context of a patent application and its requirements. Various modifications to the embodiments and the generic principles and features described herein will be readily apparent to those skilled in the art. Thus, the present invention is not intended to be limited to the embodiment shown but is to be accorded the widest scope consistent with the principles and features described herein.

As shown in the drawings for purposes of illustration, the invention is a method and system for providing recycling information. The invention involves placing recycling information, wherein the recycling information includes instructions on where to recycle the product, directly onto the product. By placing recycling information directly onto the product, the likelihood that a consumer will have the information necessary to effectively recycle a product when the time comes to dispose of the product, is increased. Additionally, the possibility that the product is returned to a location preferred by the vendor, as opposed to returning the product to a competitor, is also substantially increased. By returning the product to a location preferred by the vendor, the vendor can be assured that the refurbished/recycled product will have the same quality as the original product.

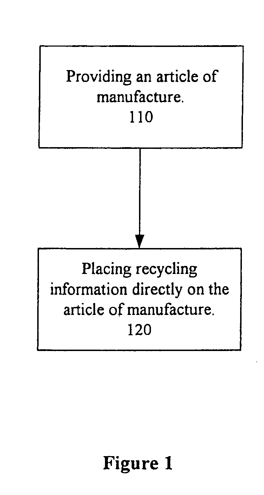

For a better understanding of the present invention please refer to Figure 1. Figure 1 is a high-level flow chart of a method in accordance with an embodiment of the present invention. First, an article of manufacture is provided, via step 110. In an embodiment, the article of manufacture is a computer product. Next, recycling information is placed directly on the article of manufacture, via step 120. In an embodiment, the recycling information includes instructions on where to recycle the article of manufacture.

In an embodiment, the instructions on where to recycle the article of manufacture include a street address. This could be the address of the manufacturer or an authorized dealer of the manufacturer's products. For a Hewlett-Packard computer product, for example, the instructions could include the street address of a Hewlett-Packard recycling center or an authorized Hewlett-Packard recycling facility.

Additionally, the instructions could include a uniform resource locator (URL) that a user can access to get instructions on where to recycle the article of manufacture. A URL is the web address that defines the route to a file on the Web or any other Internet facility. URLs are typed into the browser to access Web pages, and URLs are embedded within the pages themselves to provide the hypertext links to other pages.

The URL contains the protocol prefix, port number, domain name, subdirectory names and file name. Port addresses are generally defaults and are rarely specified. To access a home page on a Web site, only the protocol and domain name are required. For example,
http://www.hewlettpackard.com
retrieves the home page at The Hewlett-Packard Company Web site. The "http" is the Web protocol, and www.hewlettpackard.com is the domain name.

If the page is stored in another directory, or if a page other than the home page is required, slashes are used to separate the names. For example,
http://www.hewlettpackard.com/order.html
points to the order page.

If a required page is stored in a subdirectory, its name is separated by a slash. Like path names in DOS and Windows, subdirectories can be several levels deep. For example, the components of the following hypothetical URL are described below:

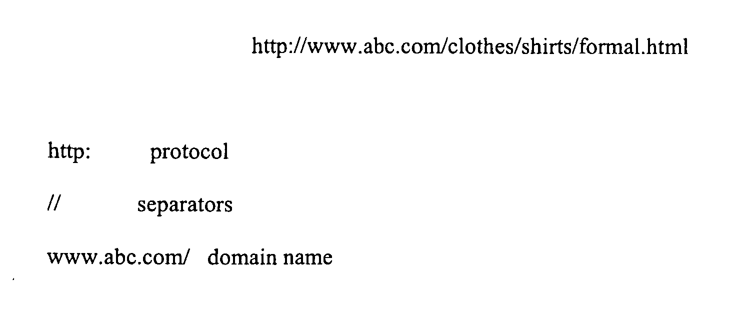

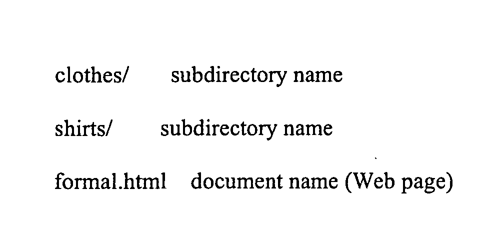

Also, the instructions could include a telephone number. This telephone number could be the telephone number to a customer service center or a recycling center. Accordingly, a customer service technician or an automated voice message could give a caller instructions on how and where to recycle the used product.

Furthermore, the instructions could include an electronic mail (email) address for a customer to contact for information on how/where to recycle a used product. An email address is an address within a network messaging system, wherein the network messaging system includes an electronic mail program, that provides a user interface with send and receive functions.

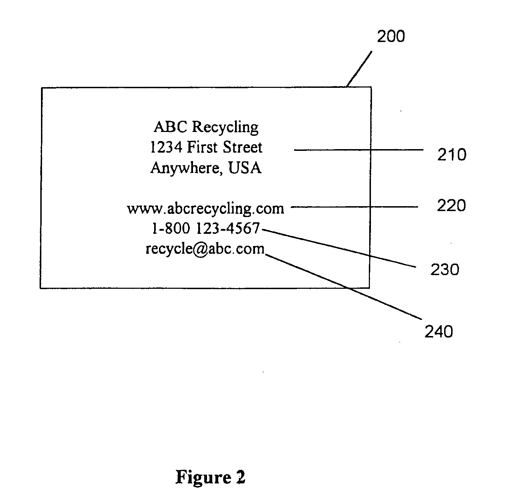

In an embodiment of the invention, the instructions are included on a sticker/label that is placed directly on the product. For a better understanding, please refer now to Figure 2. Figure 2 is an illustration of a sticker/label in accordance with an embodiment of the present invention. The sticker/label 200 includes a street address 210, a URL 220, a phone number 230, and an email address 240. Again, in an embodiment the sticker/label 200 is placed directly on a computer product. The computer product could be a printer, a monitor, a printer cartridge, a battery, etc.

Although the sticker/label 200 includes a street address 210, a URL 220, a phone number 230, and an email address 240, the sticker/label 200 does not necessarily have to include all of these features. For example, in an alternate embodiment, the sticker/label 200 could include only the street address 210 or only the URL 220 or any of a variety of combinations.

Although the above-described embodiment is utilized in conjunction with computer products one of ordinary skill in the art will readily recognize that the invention could be utilized with a variety of different products while remaining within the spirit and scope of the present invention.

In another embodiment, the recycling information is formed directly onto the products. For example, if the product is a printer cartridge or a battery that is made of plastic or a similar material, the instructions can be formed directly onto the plastic portion of the product. Again, the recycling information includes instructions on where to recycle the article of manufacture (street address, email, URL, etc.)

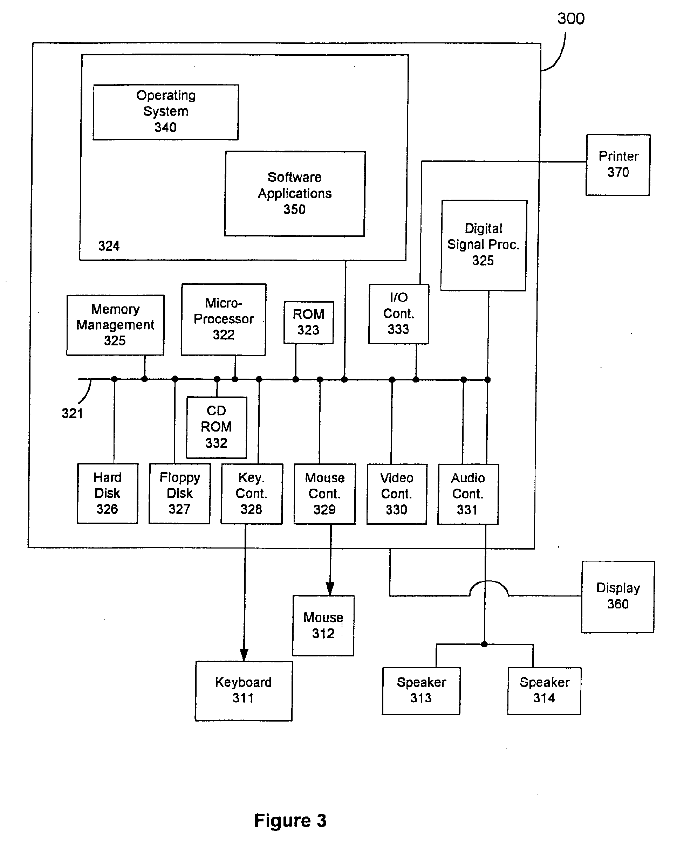

An alternate embodiment of the present invention involves the implementation of a computer system and the associated components. For an example of a computer system that could be utilized in conjunction with an embodiment in accordance with the present invention, please refer to Figure 3. In Figure 3, a computer system 300, including, a keyboard 311, a mouse 312 and a printer 370 are depicted in block diagram form. The system 300 includes a system bus or plurality of system buses 321 to which various components are coupled and by which communication between the various components is accomplished. The microprocessor 322 is connected to the system bus 321 and is supported by read only memory (ROM) 323 and random access memory (RAM) 324 also connected to the system bus 321. A microprocessor is one of the Intel family of microprocessors including the 386, 486 or Pentium microprocessors. However, other microprocessors including, but not limited to, Motorola's family of microprocessors such as the 68000, 68020 or the 68030 microprocessors and various Reduced Instruction Set Computer (RISC) microprocessors such as the PowerPC chip manufactured by IBM. Other RISC chips made by Hewlett Packard, Sun, Motorola and others may be used in the specific computer.

The ROM 323 contains, among other code, the Basic Input-Output system (BIOS) which controls basic hardware operations such as the interaction of the processor and the disk drives and the keyboard. The RAM 324 is the main memory into which the operating system 340 and software applications 350 are loaded. The memory management chip 325 is connected to the system bus 321 and controls direct memory access operations including, passing data between the RAM 324 and hard disk drive 326 and floppy disk drive 327. The CD ROM 332 also coupled to the system bus 321 is used to store a large amount of data, e.g., a multimedia program or presentation.

Also connected to this system bus 321 are various I/O controllers: the keyboard controller 328, the mouse controller 329, the video controller 330, and the audio controller 331. As might be expected, the keyboard controller 328 provides the hardware interface for the keyboard 311, the mouse controller 329 provides the hardware interface for mouse 312, the video controller 330 is the hardware interface for the display 360, and the audio controller 331 is the hardware interface for the speakers 313, 314. Another I/O controller 333 enables communication with the printer 370.

The system 300 may also be utilized in conjunction with a distributed computing environment where tasks are performed by remote processing devices that are linked through a communications network. This type of computing environment is desirable when the recycling information includes a URL or an email address. In a distributed computing environment, program modules may be located in both local and remote memory storage devices. Execution of the program modules may occur locally in a stand-alone manner or remotely in a client/server manner. Examples of such distributed computing environments include local area networks of an office, enterprise-wide computer networks, and the Internet.

As previously mentioned, the system 300 can be coupled to a printer 370. Although the printer 370 could be coupled directly to the system 300 via printer cables or the like, one of ordinary skill in the art will readily recognize that the printer 370 could be coupled to the system by a variety of different means while remaining within the spirit and scope of the present invention. For example, the printer 370 could be coupled to the system 300 via a wireless communication link such as an Infra-Red or Bluetooth link.

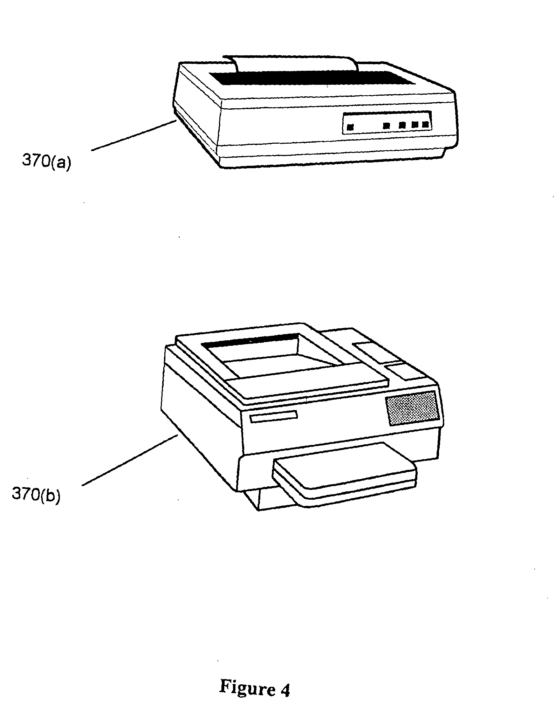

The printer 370 could be an ink jet printer or a laser printer. Figure 4 shows an ink jet printer 370(a) and a laser printer 370(b). Accordingly, the printer 370 has an associated printer cartridge. For example, the ink jet printer 370(a) has an associated ink jet cartridge and the laser printer 370(b) has at least one associated laser toner cartridge.

In an alternate embodiment of the present invention, sensors within the printer 370 will electronically notify the system 300 once the printer 370 gets low on ink/toner. Once the system 300 is notified that the printer 370 is low on ink, the system 300 could be configured to display a message on the display 360 containing instructions on where to recycle the ink jet/toner cartridge. Accordingly, the message includes a street address, a URL, a telephone number or the like indicating where the consumer should take the cartridge to recycle it.

Although the above-described embodiment indicates that the system 300 could be configured to display a message on the display 360 containing instructions on where to recycle the ink jet/toner cartridge once the printer 370 gets low on ink/toner, a variety of implementations could be utilized while remaining within the spirit and scope of the present invention. For example, in an alternate embodiment, the printer 370 could be configured to automatically print instructions on where to recycle the ink jet/toner cartridge once the printer 370 gets low on ink/toner. Additionally, another embodiment could allow a processor in the printer 370 to submit a query to a remote web site, once the printer 370 gets low on ink/toner wherein the query includes a request for instructions on where to recycle the ink jet/toner cartridge. The remote web site could subsequently send the instructions via email to the attached computer system 300.

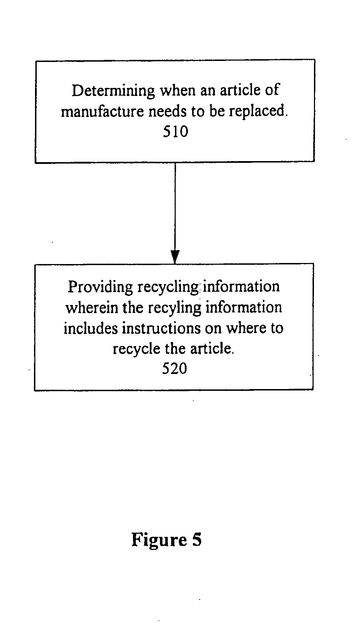

To better understand this embodiment of the present invention, please refer now to Figure 5. Figure 5 is flowchart of an alternate embodiment of the present invention. First, a determination is made as to when an article of manufacture needs to be replaced, via step 510. In an embodiment, the article of manufacture is a printer cartridge. Next, recycling information is provided wherein the recycling information comprises instructions on where to recycle the article of manufacture once it is determined that the article of manufacture needs to be replaced, via step 520.

In an embodiment, when the printer cartridge needs to be replaced, the printer containing the printer cartridge notifies the associated computer system and a message is displayed wherein the message includes instructions on where to recycle the article of manufacture. Again, the message includes a street address, a URL, a telephone number or the like indicating where the consumer should take the cartridge to recycle it.

Although the above-described embodiment of the present invention is described in conjunction with a printer cartridge, one of ordinary skill in the art will readily recognize that a variety of different computer or computer-related products could be incorporated while remaining within the spirit and scope of the present invention. For example, a battery in Personal Digital Assistant or a laptop computer, could be configured to electronically notify a user where to recycle the battery once the battery reaches a predetermined threshold level.

The above-described embodiment of the invention may also be implemented, for example, by operating a computer system to execute a sequence of machine-readable instructions. The instructions may reside in various types of computer readable media. In this respect, another aspect of the present invention concerns a programmed product, comprising computer readable media tangibly embodying a program of machine readable instructions executable by a digital data processor to perform the method in accordance with an embodiment of the present invention.

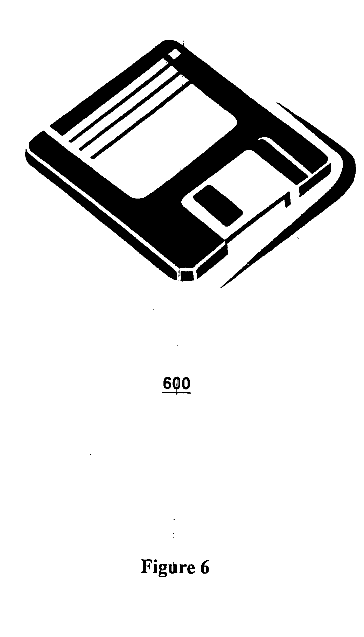

This computer readable media may comprise, for example, RAM contained within the system. Alternatively, the instructions may be contained in another computer readable media such as a magnetic data storage diskette and directly or indirectly accessed by the computer system. Figure 6 is an illustration of a data storage diskette 600 in accordance with an embodiment of the present invention. Whether contained in the computer system or elsewhere, the instructions may be stored on a variety of machine readable storage media, such as a DASD storage (for example, a conventional "hard drive" or a RAID array), magnetic tape, electronic read-only memory, an optical storage device (for example, CD ROM, WORM, DVD, digital optical tape), paper "punch" cards, or other suitable computer readable media including transmission media such as digital, analog, and wireless communication links. In an illustrative embodiment of the invention, the machine-readable instructions may comprise lines of compiled C, C++, or similar language code commonly used by those skilled in the programming for this type of application arts.

A method and system for providing recycling information is disclosed. Through the use of the method and system in accordance with the present invention, the likelihood that a consumer will have the information necessary to effectively recycle a product is increased. Additionally, the possibility that the product is returned to a location preferred by the vendor, as opposed to returning the product to a competitor, is also substantially increased.

Although the present invention has been described in accordance with the embodiments shown, one of ordinary skill in the art will readily recognize that there could be variations to the embodiments and those variations would be within the spirit and scope of the present invention. Accordingly, many modifications may be made by one of ordinary skill in the art without departing from the scope of the appended claims.

## Claims

1. A method for providing recycling information for an article of manufacture comprising:
providing an article of manufacture; and
placing recycling information [210] directly on the article of manufacture wherein the recycling information [210] comprises instructions on where to recycle the article of manufacture.

2. A method as claimed in claim 1 wherein the act of placing recycling information [210] directly on the article of manufacture further comprises placing a sticker [200] on the article of manufacture wherein the sticker includes the instructions.

3. A method as claimed in claim 1 wherein the article of manufacture comprises a computer product, the computer product is comprised of a plastic material and the act of placing recycling information directly on the article of manufacture further comprises molding the recycling information [210] directly onto the computer product.

4. A method as claimed in any preceding claim further comprising:
determining when the article of manufacture needs to be recycled; and
providing recycling information [210] wherein the recycling information comprises instructions on where to recycle the article of manufacture once the article of manufacture needs to be recycled.

5. A method as claimed in claim 4 wherein the article of manufacture comprises a printer cartridge and the act of providing recycling information [210] comprises electronically sending the recycling information [210].

6. A method as claimed in claim 5 wherein the act of electronically sending the recycling information [210] comprises displaying a message onto a display wherein the message includes the instructions on where to recycle the article of manufacture.

7. A system for providing recycling information for an article of manufacture comprising:
means for determining when the article of manufacture needs to be recycled; and
means for providing recycling information [210] wherein the recycling information [210] comprises instructions on where to recycle the article of manufacture once the article of manufacture needs to be recycled.

8. A system as claimed in claim 7 wherein the article of manufacture comprises a computer product and the means for determining when the article of manufacture needs to be recycled comprises electronic means coupled to the computer product.

9. A system as claimed in claim 8 wherein the computer product comprises a printer cartridge and the means for providing recycling information [210] comprises means for electronically sending the recycling information [210].

10. A computer program product for providing recycling information for an article of manufacture, the computer program product comprising: a computer usable medium [600] having computer readable program means for causing a computer to perform the steps:
determining when the article of manufacture needs to be recycled; and
providing recycling information [210] wherein the recycling information [210] comprises instructions on where to recycle the article of manufacture once the article of manufacture needs to be recycled.
